# EUROPÄISCHE PATENTSCHRIFT

(11) **EP 3 938 254 B1**
(45) Veröffentlichungstag und Bekanntmachung des Hinweises auf die Patenterteilung: **10.05.2023**
(21) Anmeldenummer: 20711555.1
(22) Anmeldetag: 11.03.2020
(51) Int. Cl.: B60T 7/04, B60T 13/14, B60T 13/68, B60T 7/12, B60T 8/1755, B60T 8/26

(54) **VERFAHREN UND STEUERGERÄT ZUR VERMEIDUNG VON RUCKMOMENTEN BEI EINER VERZÖGERUNG EINES FAHRZEUGS**
METHOD AND CONTROL UNIT TO AVOID JOLT MOMENTS DURING THE SLOWING DOWN OF A VEHICLE
PROCÉDÉ ET UNITÉ DE CONTRÔLE POUR ÉVITER DES MOMENTS DE SECOUSSE PENDANT LA DÉCÉLÉRATION D'UN VÉHICULE

(30) Priorität: 15.03.2019 DE 102019203573
(43) Veröffentlichungstag der Anmeldung: 19.01.2022
(73) Patentinhaber: Continental Automotive Technologies GmbH, 30165 Hannover (DE); NISSAN MOTOR Co., Ltd., Yokohama-shi, Kanagawa 221-0023 (JP)
(72) Erfinder: ZIMMERMANN, Jochen, 60488 Frankfurt am Main (DE); KATAYAMA, Takeshi, Atsugi-shi, Kanagawa 2430123 (JP)
(74) Vertreter: Schlosser, Martin
(86) Internationale Anmeldenummer: PCT/EP2020/056523
(87) Internationale Veröffentlichungsnummer: WO 2020/187667

(56) Entgegenhaltungen:
- DE-A1- 10 055 384
- DE-A1-102013 224 870

## Beschreibung

Die vorliegende Erfindung betrifft ein Verfahren zur Vermeidung von Ruckmomenten bei einer Verzögerung eines Fahrzeugs mittels eines Bremssystems gemäß Anspruch 1, sowie ein entsprechendes Steuergerät für ein Bremssystem eines Fahrzeugs nach Anspruch 8.

In modernen Kraftfahrzeugen werden mehr und mehr Fahrfunktionen umgesetzt, welche den Fahrer bei den üblichen Aufgaben bei der Führung des Kraftfahrzeugs unterstützen, oder den Fahrer sogar vollständig von diesen entbinden. Hierzu zählen beispielsweise Funktionen, wie automatische Einparkfunktionen, oder Abstandregelfunktionen (ACC). In hydraulischen Bremsanlagen sind unter anderem zur Umsetzung derartiger Assistenzfunktionen eine elektrisch betätigbare Druckbereitstellungseinrichtung, oftmals eine zweikreisige Kolbenpumpe, und Ventile vorgesehen, durch welche aktiv radindividuelle Bremsdrücke in den jeweiligen Radbremsen des Fahrzeugs eingestellt werden können.

Insbesondere bei einer automatischen Einparkfunktion ist eine sehr präzise Steuerung des Fahrzeugs und insbesondere dessen Geschwindigkeit notwendig, da es bei einer unzureichenden Genauigkeit der Steuerung zu Kollisionen mit stehenden Objekten kommen kann. Gleichzeitig gilt es, ruckartige Bewegungen des Fahrzeugs zu vermeiden, da dies von einem Fahrzeugführer als störend oder unangenehm empfunden würde. Aufgrund der sehr geringen Geschwindigkeiten bei einem Einparkvorgang sind zur Verzögerung des Fahrzeugs häufig nur sehr geringe Bremsdrücke im Bereich von 10 bis 20 bar in den Radbremsen des Bremssystems nötig. Aufgrund der zur Steuerung des Bremsdrucks verwendeten Kombination von Kolbenpumpe und Ventilen, welche den Bremsdruck in den Radbremsen des Bremssystems bei niedrigen Drücken oftmals nur mit einer Genauigkeit von 3 bis 8 bar regeln können, kann es jedoch immer wieder zu ruckartigen Verzögerungen des Fahrzeugs bei einem langsamen Einparkvorgang kommen.

Das Dokument DE 100 553 84 A1 offenbart ein Verfahren zum Halten eines durch eine Bremspedalbetätigung in einer zweikreisigen hydraulischen Bremsanlage eingesteuerten Bremsdruckes in den Radbremsen bei ermittelter Anhaltesituation und/oder Bremspedalbetätigung über ein nach einer Zeitfunktion oder in Abhängigkeit von Zustandsinformationen der Bremsanlage gesteuertes, wechselseitiges Halten des Bremsdruckes in dem einen oder anderen Bremskreis der Bremsanlage.

Demgegenüber liegt der vorliegenden Anmeldung die objektive technische Aufgabe zugrunde, ein Verfahren zur Vermeidung von Ruckmomenten bei einer Verzögerung eines Fahrzeugs und ein entsprechendes Steuergerät zu schaffen.

Hinsichtlich eines Verfahrens wird diese Aufgabe mit dem Verfahren gemäß Anspruch 1 gelöst. Vorteilhafte Ausgestaltungen des Verfahrens werden in den Unteransprüchen 2 bis 7 angegeben. Hinsichtlich eines Steuergeräts wird die Aufgabe mit dem Steuergerät gemäß Anspruch 8 gelöst.

In einem ersten Aspekt betrifft die Erfindung ein Verfahren zur Vermeidung von Ruckmomenten bei einer Verzögerung eines Fahrzeugs mittels eines Bremssystems, wobei das Bremssystem wenigstens eine elektrisch betätigbare Druckbereitstellungseinrichtung, eine Mehrzahl von mit der Druckbereitstellungseinrichtung verbundenen, hydraulischen Radbremsen, die jeweils einem Rad des Fahrzeugs zugeordnet sind, und eine Ventileinrichtung aufweist. Dabei ist die Ventileinrichtung dazu ausgebildet, eine wählbare Teilmenge der Radbremsen mit einem durch die Druckbereitstellungseinrichtung bereitgestellten Druck zu beaufschlagen. Im Zuge des Verfahrens wird dabei zunächst eine Bremsanforderung festgestellt. Anschließend wird die Fahrzeuggeschwindigkeit bestimmt und geprüft, ob die Fahrzeuggeschwindigkeit unterhalb eines definierten Grenzwerts liegt. Wenn die Fahrzeuggeschwindigkeit unterhalb des Grenzwerts liegt, wird dann eine Teilmenge der Radbremsen ausgewählt und ausschließlich die Teilmenge der Radbremsen durch die Druckbereitstellungseinrichtung mit einem Druck beaufschlagt, wobei der Druck in Abhängigkeit der ausgewählten Teilmenge der Radbremsen festgelegt wird.

Dem erfindungsgemäßen Verfahren liegt die Überlegung zugrunde, dass bei Verwendung einer Teilmenge der Radbremsen, die insgesamt aufzubringende Kraft zur Verzögerung des Fahrzeugs durch eine geringere Zahl von Radbremsen aufgebracht werden muss. Folglich muss in diesen Radbremsen ein, verglichen mit einer Bremsung über alle Radbremsen eines Fahrzeugs, höherer Bremsdruck eingestellt werden, um eine entsprechende Verzögerung zu erzielen. Die absolute Genauigkeit, mit der der Bremsdruck durch die Druckbereitstellungseinrichtung erzeugt wird, ändert sich in diesem Fall jedoch nicht oder nur geringfügig gegenüber einer Bremsung über alle Radbremsen des Fahrzeugs. Folglich ergibt sich aufgrund des höheren Bremsdrucks in den Radbremsen bei gleicher Verzögerung des Fahrzeugs eine geringere relativere Abweichung des tatsächlichen Bremsdrucks von einem Soll-Bremsdruck aufgrund der gleichbleibenden absoluten Genauigkeit der Druckbereitstellung. Als direkte Folge hiervon werden Ruckmomente aufgrund von prozentual stark von einem Soll-Bremsdruck abweichenden Bremsdrücken bei einer Verzögerung des Fahrzeugs effektiv vermieden.

Neben einer Berücksichtigung der reinen Anzahl von Radbremsen in der Teilmenge bei der Festlegung des Drucks zur Beaufschlagung der Teilmenge der Radbremsen, kann auch vorgesehen sein, dass die Position der Radbremsen im Fahrzeug, insbesondere unter Berücksichtigung einer Bewegungsrichtung des Fahrzeugs, bei der Festlegung des Drucks berücksichtigt wird. Ferner können weitere Randbedingungen in die Festlegung des Drucks einfließen.

Unter einer "Teilmenge der Radbremsen" ist dabei jede Menge von Radbremsen zu verstehen, in der wenigstens eine Radbremse des Fahrzeugs nicht enthalten ist. Die Teilmenge der Radbremsen kann dabei durchaus auch aus einer einzelnen Radbremse des Fahrzeugs bestehen. Bei einer geringen Geschwindigkeit des Fahrzeugs kann nämlich auch durch eine einzelne Radbremse bereits eine sichere Verzögerung des Fahrzeugs gewährleistet werden.

Erfindungsgemäß können auch mehrere Grenzwerte vorgesehen sein, wobei bei abnehmender Fahrzeuggeschwindigkeit sukzessive eine geringere Zahl von Radbremsen der Teilmenge von Radbremsen zur Verzögerung des Fahrzeugs zugeordnet werden.

Die Bremsanforderung kann beispielsweise durch Auslesen eines Bremspedalsensors oder eines Drucksensors des Bremssystems erfolgen.

Nach einer bevorzugten Ausführungsform ist jedoch vorgesehen, dass es sich bei der Bremsanforderung um eine durch eine automatische Fahrfunktion, insbesondere eine automatische Einparkhilfe, vorgegebene Bremsanforderung handelt. In diesem Fall wird die Bremsanforderung durch ein Steuergerät, welches zur Umsetzung der Fahrassistenzfunktion ausgebildet ist, ausgegeben.

Vorzugsweise bleiben übliche Bremsregelfunktionen, wie beispielsweise eine Antiblockierregelung, auch bei einer Bremsung über eine Teilmenge der Radbremsen weiterhin in Kraft. Dabei kann insbesondere auch vorgesehen sein, dass bei Feststellung eines aufgrund eines reduzierten Reibwerts zwischen Rad und Fahrbahn erhöhten Radschlupfes eines Rades, dessen Radbremse in der ausgewählten Teilmenge der Radbremsen enthalten ist, geprüft wird, ob über andere Radbremsen, welche aktuell nicht für die Verzögerung des Fahrzeugs verwendet werden, eine stärkere Verzögerung möglich ist. Ist dies der Fall, kann die Zuordnung von Radbremsen zu der Teilmenge entsprechend angepasst werden.

Nach einer bevorzugten Ausführungsform weist das Verfahren ferner das Feststellen eines Fahrbetriebsmodus auf, wobei der Grenzwert der Fahrzeuggeschwindigkeit durch den festgestellten Fahrbetriebsmodus festgelegt ist. Unter einem Fahrbetriebsmodus ist dabei beispielsweise eine ausgewählte Fahrstufe eines Automatikgetriebes (Rückwärtsgang), oder eine aktivierte Fahrassistenzfunktion, wie beispielsweise eine automatische Einparkhilfe zu verstehen. Auf diese Weise kann der Grenzwert der Fahrzeuggeschwindigkeit, ab der selektiv über eine Teilmenge der Radbremsen verzögert wird, automatisch an die entsprechende Fahrsituation angepasst werden. Beispielsweise kann so für einen automatischen Einparkvorgang festgelegt sein, dass ab einer Fahrzeuggeschwindigkeit unter 5 km/h nur mittels einer Teilmenge der Radbremsen verzögert werden soll.

Die Verzögerungswirkung bei einer Verzögerung durch die Teilmenge von Radbremsen kann dabei nach einer weiteren Ausführungsform dadurch verbessert werden, dass das Verfahren ferner das Ermitteln einer Bewegungsrichtung des Fahrzeugs aufweist, wobei die Teilmenge der Radbremsen in Abhängigkeit der ermittelten Bewegungsrichtung ausgewählt wird. So kann beispielsweise bei einer Bewegung des Fahrzeugs in Vorwärtsrichtung vorgesehen sein, dass die Radbremsen der Vorderachse der Teilmenge von Radbremsen zugeordnet werden, während bei einer Bewegung in Rückwärtsrichtung die Radbremsen der Hinterachse der Teilmenge von Radbremsen zugeordnet werden. Durch die dynamische Radlastverteilung bei einer Verzögerung des Fahrzeugs ist nämlich über die in Fahrtrichtung vorne angeordneten Radbremsen aufgrund der erhöhten Radlast eine stärkere Verzögerung des Fahrzeugs möglich.

Aus der Zusammenschau von Fahrtrichtung (vorwärts/rückwärts), welche beispielsweise aus dem eingelegten Gang oder durch Raddrehzahlsensoren ermittelt werden kann, und dem Lenkeinschlag kann ferner auch eine Verzögerung über eine einzelne Radbremse vorgesehen sein. Ist das Fahrzeug beispielsweise in Vorwärtsrichtung in Bewegung und die Lenkung nach rechts eingeschlagen, ist eine Verzögerung über das in Fahrtrichtung vordere linke Rad zweckmäßig, da bei Verzögerung des Fahrzeugs hier die größte Radlast erzeugt werden kann.

Ferner kann die Teilmenge der Radbremsen auch aus einer Zusammenschau der Bewegungsrichtung des Fahrzeugs und einem ermittelten Fahrbetriebsmodus bestimmt werden.

Die selektive Verzögerung über eine Teilmenge der Radbremsen ist nach einer Ausführungsform auf besonders einfache Art und Weise möglich, wenn die Ventileinrichtung zwischen den Radbremsen und der Druckbereitstellungseinrichtung angeordnete Einlassventile aufweist, durch die die Radbremsen von der Druckbereitstellungseinrichtung getrennt werden können.

Nach einer hieran anknüpfenden, bevorzugten Ausführungsform werden dann zum Beaufschlagen der Teilmenge der Radbremsen mit einem Druck durch die Druckbereitstellungseinrichtung die Einlassventile der nicht in der Teilmenge enthalten Radbremsen geschlossen und die Einlassventile der in der Teilmenge enthaltenen Radbremsen geöffnet und die Druckbereitstellungseinrichtung wird zum Aufbau des Drucks angesteuert.

Nach einer weiteren Ausführungsform handelt es sich bei der Druckbereitstellungseinrichtung um eine zweikreisige Kolbenpumpe.

In einem weiteren Aspekt betrifft die Erfindung ein Steuergerät für ein Bremssystem eines Fahrzeugs, wobei das Bremssystem eine elektrisch betätigbare Druckbereitstellungseinrichtung und eine Mehrzahl von mit der Druckbereitstellungseinrichtung verbundenen Radbremsen aufweist, die jeweils einem Rad des Fahrzeugs zugeordnet sind. Das Steuergerät ist dabei dazu ausgebildet, eine Bremsanforderung festzustellen, eine Fahrzeuggeschwindigkeit zu bestimmen, zu prüfen, ob die Fahrzeuggeschwindigkeit unterhalb eines festgelegten Grenzwerts liegt, wenn die Fahrzeuggeschwindigkeit unterhalb des Grenzwerts liegt, eine Teilmenge der Radbremsen auszuwählen und das Bremssystem so anzusteuern, dass ausschließlich die Teilmenge der Radbremsen mittels der Druckbereitstellungseinrichtung mit Druck beaufschlagt werden.

Nach einer bevorzugten Ausführungsform weist das Bremssystem eine Ventileinrichtung auf, die zwischen den Radbremsen und der Druckbereitstellungseinrichtung angeordnete Einlassventile aufweist, durch die die Radbremsen von der Druckbereitstellungseinrichtung getrennt werden können, wobei das Steuergerät dazu ausgebildet ist, die Ventileinrichtung zur Beaufschlagung der Teilmenge der Radbremsen mit einem Druck so anzusteuern, dass die Einlassventile der in der Teilmenge enthaltenen Radbremsen geöffnet und die Einlassventile der nicht in der Teilmenge enthaltenen Radbremsen geschlossen werden.

Im Folgenden werden bevorzugte Ausführungsbeispiele anhand der Figuren näher erläutert. Dabei zeigen:
- Figur 1: eine schematische Darstellung eines hydraulischen Bremssystems,
- Figur 2: eine schematische Darstellung eines Fahrzeugs und dessen Bewegungsrichtungen, und
- Figur 3: ein Flussdiagramm eines erfindungsgemäßen Verfahrens.

Im Folgenden werden einander ähnliche, oder identische Merkmale mit denselben Bezugszeichen gekennzeichnet.

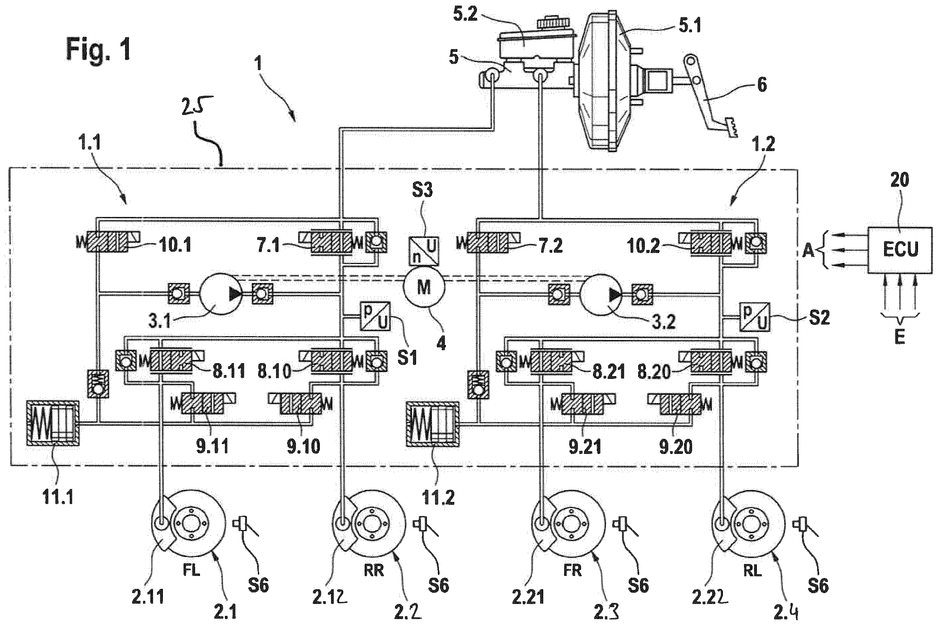

Die Figur 1 zeigt ein elektronisch geregeltes hydraulisches Bremssystem 1 eines Fahrzeugs mit einem hydraulischen Bremsensteuergerät 25 das eine elektrische Druckbereitstellungseinrichtung und Ventileinrichtung mit einer Vielzahl von Ventilen aufweist. Ferner weist das Bremssystem 1 ein elektronisches Bremsensteuergerät 20 auf, welches auf der Basis von Sensorsignalen E und weiteren Signalen als Eingangssignale Steuersignale für die Druckbereitstellungseinrichtung und die Ventile als Ausgangssignale A erzeugt. Die Radbremsen 2.11, und 2.12 bzw. 2.21 und 2.22 der Räder 2.1, 2.2, 2.3 und 2.4 sind über jeweils eine Hydraulikleitung an das Bremsensteuergerät 25 angeschlossen. Ein erster Bremskreis 1.1 des Bremsensteuergeräts 25 ist einem vorderen linken Rad 2.1 (FL) und einem hinteren rechten Rad 2.2 (RR) zugeordnet und ein zweiter Bremskreis 1.2 des Bremsensteuergeräts 25 ist einem vorderen rechten Rad 2.3 (FR) und einem hinteren linken Rad 2.4 (RL) zugeordnet.

Das Bremssystem 1 weist weiterhin einen mit einem als Tandemhauptzylinder ausgeführten Hauptbremszylinder 5 verbundenen Bremskraftverstärker 5.1 und einen Vorratsbehälter 5.2 für die Bremsflüssigkeit bzw. die Hydraulikflüssigkeit als Druckmittel auf. Der Hauptbremszylinder 5 erzeugt auslassseitig einen Bremsdruck P als Vordruck entsprechend eines mit dem Bremskraftverstärker 5.1 verbundenen Bremspedals 6, das von einem Fahrer betätigt wird. Der Hauptbremszylinder 5 ist mit den Bremskreisen 1.1 und 1.2 des Bremsensteuergeräts 25 verbunden. Das Bremsensteuergerät 25 umfasst je Bremskreis 1.1, 1.2 ein Trennventil 7.1, 7.2, welches eingangsseitig mit dem Hauptbremszylinder 5 und ausgangsseitig mit Einlassventilen 8.10 und 8.11, bzw. 8.20 und 8.21 des entsprechenden Bremskreises 1.1 bzw. 1.2 verbunden ist. Die Einlassventile 8.10 und 8.11 sowie 8.20 und 8.21 sind beispielsgemäß stromlos offen ausgeführt.

Beispielsgemäß stromlos geschlossene Auslassventile 9.10 und 9.11 des ersten Bremskreises 1.1 verbinden die Radbremsen 2.11 und 2.12 mit einem Niederdruckspeicher 11.1, der seinerseits mit einer Hydraulikpumpe 3.1 als Druckbereitstellungseinrichtung ansaugseitig verbunden ist und über ein Umschaltventil 10.1 mit dem Hauptbremszylinder 5 verbunden werden kann. Entsprechend verbinden stromlos geschlossene Auslassventile 9.20 und 9.21 des zweiten Bremskreises 1.2 die Radbremsen 2.21 und 2.22 mit einem Niederdruckspeicher 11.2, der seinerseits mit einer Druckbereitstellungseinrichtung 3.2 als Druckquelle ansaugseitig verbunden ist und über ein Umschaltventil 10.2 ebenso mit dem Hauptbremszylinder 5 verbunden werden kann. Beispielsgemäß sind die Druckbereitstellungseinrichtungen 3.1 und 3.2 als zweikreisige Kolbenpumpen, insbesondere als zweikreisige Exzenterkolbenpumpen ausgeführt.

Die Hydraulikpumpen 3.1 und 3.2 werden durch einen Elektromotor 4 angetrieben, der von dem Steuergerät 20 elektrisch steuerbar ist. Wird der Elektromotor 4 angesteuert, so saugen die Hydraulikpumpen 3.1 und 3.2 ansaugseitig Druckmittel an und geben Druckmittel auf der Hochdruckseite ab. Der so von den Hydraulikpumpen 3.1 und 3.2 aufgebaute Bremsdruck wird jeweils von einem in dem ersten Bremskreis 1.1 angeordneten Drucksensor S1 und einem in dem zweiten Bremskreis 1.2 angeordneten weiteren Drucksensor S2 gemessen.

Zur Erfassung des Drehverhaltens der Räder 2.1, 2.2, 2.3 und 2.4 sind jeweils Drehzahlsensoren S6 vorhanden, die ihre Sensorsignale dem Steuergerät 20 zur Auswertung zuführen, um z. B. eine entsprechende Schlupfregelung an den Rädern 2.1 bis 2.4 ausführen zu können.

Erfolgt beispielsweise in Folge eines ESC-Regeleingriffs eine Bremsanforderung für den ersten Bremskreis 1.1, wird das Bremsensteuergerät 25 durch das elektronische Steuergerät 20 mittels entsprechender Ausgangssignale A so angesteuert, dass zunächst das Trennventil 7.1 geschlossen und das Umschaltventil 10.1 geöffnet wird. Durch entsprechende Ansteuerung des Motors 4 und mithin der Hydraulikpumpe 3.1 wird durch die Hydraulikpumpe 3.1 Druckmittel aus dem Vorratsbehälter 5.2 angesaugt und über die geöffneten Einlassventile 8.10 und 8.11 den entsprechenden Radbremsen 2.11 und 2.12 zugeführt, sodass der gewünschte Bremsdruck in den Radbremsen 2.11 und 2.12 eingestellt wird.

Das vorstehend beschriebene Bremssystem ist an sich aus dem Stand der Technik bekannt und ist für ABS-Regelfunktionen und ESC/Fahrstabilitätsfunktionen gut geeignet. Daneben wird das vorstehend beschriebene Bremsensteuergerät 25 zunehmend auch für Bremsanforderungen für Fahrfunktionen wie ACC verwendet. Insbesondere bei niedrigen Geschwindigkeiten sind für die Verzögerung eines Fahrzeugs häufig nur geringe Bremsdrücke nötig. Diese geringen Bremsdrücke können jedoch durch das Bremsensteuergerät 25 bei einer Verzögerung des Fahrzeugs über alle Radbremsen 2.11, 2.12, 2.21 und 2.22 häufig nicht mit einer hinreichenden Genauigkeit eingestellt werden, so dass es zu ruckartigen Verzögerungen des Fahrzeugs kommen kann. Diesem Umstand wird durch die vorliegende Erfindung abgeholfen.

Das Bremsensteuergerät 25 muss dabei nicht zwingend in der in Figur 1 dargestellten Konfiguration eines hydraulischen Bremssystems mit einem Bremskraftverstärker 5.1 eingesetzt werden. Vielmehr kann das Bremsensteuergerät 25 auch in einem elektrohydraulischen Bremssystem eingesetzt werden, in dem eine Bremsanforderung durch Pedal- und Drucksensoren erfasst und auf Grundlage der erfassten Sensordaten ein entsprechender Bremsdruck durch einen elektrisch angesteuerten Linearaktuator aufgebaut wird.

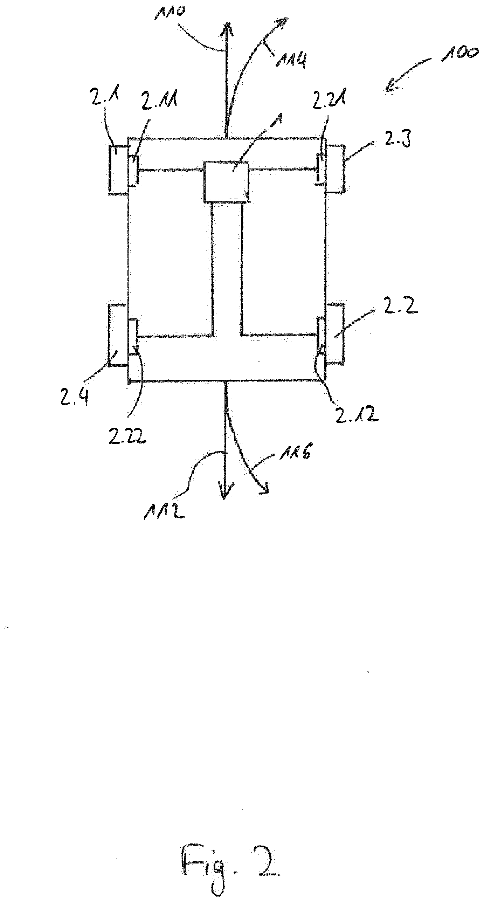

Die Figur 2 zeigt eine schematische Darstellung eines Fahrzeugs 100, welches mit einem Bremssystem 1 gemäß Figur 1 ausgestattet ist. Aus Gründen der Übersichtlichkeit ist hier jedoch nur schematisch das Bremssystem 1 und die mit dem Bremssystem 1 verbundenen, hydraulischen Radbremsen 2.11, 2.12, 2.21 und 2.22 dargestellt. Dabei sind die Radbremsen 2.11, 2.12, 2.21 und 2.22 jeweils den Rädern 2.1, 2.2, 2.3 und 2.4 des Fahrzeugs 100 zugeordnet.

In der Figur 2 sind ferner unterschiedliche Varianten für eine Fortbewegung des Fahrzeugs 100 durch die Pfeile 110, 112, 114 und 116 angedeutet. Neben der Fahrt in Vorwärtsrichtung 110 und Rückwärtsrichtung 112 sind dabei auch Kurvenfahrten mit einem Lenkeinschlag nach rechts angedeutet, wobei wiederum jeweils eine Bewegung in Vorwärtsrichtung 114 und Rückwärtsrichtung 116 angedeutet sind.

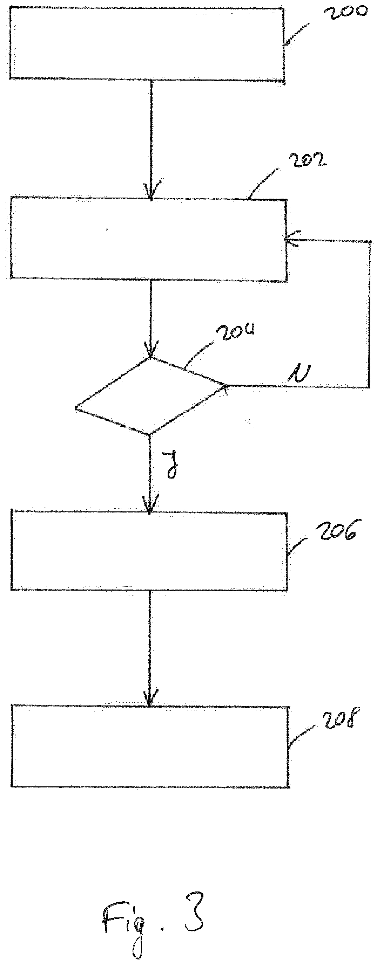

Im Folgenden wird nun ein erfindungsgemäßes Verfahren anhand des Flussdiagramms der Figur 3 in Zusammenschau mit Figur 1 und Figur 2 erläutert.

Dabei wird in einem ersten Verfahrensschritt 200 zunächst eine Bremsanforderung festgestellt. Dabei kann es sich sowohl um eine Bremsanforderung handeln, welche durch einen Fahrer des Fahrzeugs 100 durch Betätigung des Bremspedals 6 eingeleitet wird, als auch um eine Bremsanforderung, die durch eine Fahrassistenzfunktion ausgelöst wurde. Bei einer Betätigung des Bremspedals 6 kann die Bremsanforderung beispielsweise anhand eines Pedalwegsensors für das Bremspedal 6 oder anhand eines der Drucksensoren S1 oder S2 erfasst werden.

Nachdem die Bremsanforderung erfasst wurde, wird anschließend in Schritt 202 die Geschwindigkeit des Fahrzeugs 100 ermittelt. Hierzu können beispielsweise von den Raddrehzahlsensoren S6 ausgegebene Informationen bzgl. der Drehzahlen der einzelnen Räder 2.1 bis 2.4 herangezogen werden.

Anschließend wird in Schritt 204 geprüft, ob die ermittelte Fahrzeuggeschwindigkeit unterhalb eines definierten Grenzwerts für die Fahrzeuggeschwindigkeit liegt. Der Grenzwert kann dabei beispielsweise aus einem aktuellen Fahrbetriebsmodus des Fahrzeugs 100, also beispielsweise einer Fahrtrichtung oder einem aktivierten Fahrassistenzprogramm abgeleitet werden.

Wird dabei festgestellt, dass der Grenzwert der Fahrzeuggeschwindigkeit nicht unterschritten wurde, springt das Verfahren zurück zu Schritt 202 und das Fahrzeug 100 wird über alle Radbremsen 2.11, 2.12, 2.21 und 2.22 verzögert.

Wird hingegen festgestellt, dass der Grenzwert der Fahrzeuggeschwindigkeit unterschritten wurde, wird in Schritt 206 eine Teilmenge der Radbremsen 2.1 bis 2.4 ausgewählt, welche für die Verzögerung des Fahrzeugs 100 verwendet werden soll. Die Teilmenge kann z.B. drei, zwei, oder nur eine der vier Radbremsen 2.11, 2.12, 2.21, 2.22 umfassen. Dabei kann vorgesehen sein, dass die Teilmenge von der Fahrtrichtung des Fahrzeugs 100 abhängt. Bewegt sich das Fahrzeug 100 vorwärts, also in Richtung des Pfeils 110, können die beiden Radbremsen 2.11 und 2.21 der Räder 102 und 106 der Fahrzeugvorderachse ausgewählt werden. Dies hat den Vorteil, dass bei dem Bremsvorgang eine dynamische Radlastverteilung erfolgt, welche an den Rädern 102 und 106 eine höhere Verzögerung ermöglicht. Gleichermaßen wäre bei einer Rückwärtsfahrt in Richtung 112 eine Verzögerung über die Radbremsen 2.22 und 2.12 der Fahrzeughinterachse zweckmäßig.

Wird hingegen festgestellt, dass die Lenkung des Fahrzeugs 100 nach rechts eingeschlagen ist und sich das Fahrzeug vorwärts bewegt (Richtung 114), kann zur Verzögerung des Fahrzeugs 100 auf die Radbremse 2.11 des vorderen linken Rades 2.1 zurückgegriffen werden, da hier die größten Verzögerungswerte zu erreichen sind. Gleichermaßen kann bei Rückwärtsfahrt entlang der Richtung 116 eine Verzögerung über die Radbremse 2.22 des hinteren linken Rades 2.4 zweckmäßig sein.

Nach Auswahl der Teilmenge der Radbremsen 2.11, 2.12, 2.21, 2.22 wird dann in Schritt 208 das Fahrzeug durch Beaufschlagen ausschließlich der Teilmenge der Radbremsen 2.11, 2.12, 2.21, 2.22 mit einem Druck durch die Druckbereitstellungseinrichtung, beispielsgemäß die Hydraulikpumpen 3.1 und 3.2, verzögert. Zur selektiven Beaufschlagung der ausgewählten Teilmenge der Radbremsen 2.11, 2.12, 2.21, 2.22 werden vorzugsweise die Einlassventile 8.10, 8.11, 8.20 und 8.21 jener Radbremsen 2.11, 2.12, 2.21, 2.22 geschlossen, welche nicht in der Teilmenge enthalten sind, während die Radbremsen 2.11, 2.12, 2.21, 2.22 der Teilmenge über die offenen Einlassventile 8.10, 8.11, 8.20, 8.21 von der Druckbereitstellungseinrichtung mit Druck versorgt werden.

## Patentansprüche

1. Verfahren zur Vermeidung von Ruckmomenten bei einer Verzögerung eines Fahrzeugs (100) mittels eines Bremssystems (1), wobei das Bremssystem (1) wenigstens eine elektrisch betätigbare Druckbereitstellungseinrichtung (3.1, 3.2), eine Mehrzahl von mit der Druckbereitstellungseinrichtung (3.1, 3.2) verbundenen, hydraulischen Radbremsen (2.11, 2.12, 2.21, 2.22), die jeweils einem Rad (2.1, 2.2, 2.3, 2.4) des Fahrzeugs (100) zugeordnet sind, und eine Ventileinrichtung aufweist, wobei die Ventileinrichtung dazu ausgebildet ist, eine wählbare Teilmenge der Radbremsen (2.11, 2.12, 2.21, 2.22) mit einem durch die Druckbereitstellungseinrichtung (3.1, 3.2) bereitgestellten Druck zu beaufschlagen, wobei das Verfahren die folgenden Schritte aufweist:
• Feststellen einer Bremsanforderung,
• Bestimmen einer Fahrzeuggeschwindigkeit,
• Prüfen, ob die Fahrzeuggeschwindigkeit unterhalb eines definierten Grenzwerts liegt,
• Wenn die Fahrzeuggeschwindigkeit unterhalb des Grenzwerts liegt, Auswählen der Teilmenge der Radbremsen (2.11, 2.12, 2.21, 2.22) und
• Beaufschlagen ausschließlich der Teilmenge der Radbremsen (2.11, 2.12, 2.21, 2.22) mit einem Druck durch die Druckbereitstellungseinrichtung (3.1, 3.2), wobei der Druck in Abhängigkeit der ausgewählten Teilmenge der Radbremsen (2.11, 2.12, 2.21, 2.22) festgelegt wird.

2. Verfahren nach Anspruch 1, **dadurch gekennzeichnet, dass** es sich bei der Bremsanforderung um eine durch eine automatische Fahrfunktion, insbesondere eine automatische Einparkfunktion, vorgegebene Bremsanforderung handelt.

3. Verfahren nach einem der vorherigen Ansprüche, **dadurch gekennzeichnet, dass** das Verfahren ferner das Feststellen eines Fahrbetriebsmodus aufweist, wobei der Grenzwert der Fahrzeuggeschwindigkeit durch den festgestellten Fahrbetriebsmodus festgelegt ist.

4. Verfahren nach einem der vorherigen Ansprüche, **dadurch gekennzeichnet, dass** das Verfahren das Ermitteln einer Bewegungsrichtung (110, 112, 114, 116) des Fahrzeugs (100) aufweist, wobei die Teilmenge der Radbremsen (2.11, 2.12, 2.21, 2.22) in Abhängigkeit der ermittelten Bewegungsrichtung (110, 112, 114, 116) ausgewählt wird.

5. Verfahren nach einem der vorherigen Ansprüche, **dadurch gekennzeichnet, dass** die Ventileinrichtung zwischen den Radbremsen (2.11, 2.12, 2.21, 2.22) und der Druckbereitstellungseinrichtung (3.1, 3.2) angeordnete Einlassventile (8.10, 8.11, 8.20, 8.21) aufweist, durch die die Radbremsen (2.11, 2.12, 2.21, 2.22) von der Druckbereitstellungseinrichtung (3.1, 3.2) getrennt werden können.

6. Verfahren nach Anspruch 5, **dadurch gekennzeichnet, dass** zum Beaufschlagen der Teilmenge der Radbremsen (2.11, 2.12, 2.21, 2.22) mit einem Druck durch die Druckbereitstellungseinrichtung (3.1, 3.2) die Einlassventile (8.10, 8.11, 8.20, 8.21) der nicht in der Teilmenge enthalten Radbremsen (2.11, 2.12, 2.21, 2.22) geschlossen und die Einlassventile (8.10, 8.11, 8.20, 8.21) der in der Teilmenge enthaltenen Radbremsen (2.11, 2.12, 2.21, 2.22) geöffnet werden und die Druckbereitstellungseinrichtung (3.1, 3.2) zum Aufbau des Drucks angesteuert wird.

7. Verfahren nach einem der vorherigen Ansprüche, **dadurch gekennzeichnet, dass** es sich bei der Druckbereitstellungseinrichtung (3.1, 3.2) um eine zweikreisige Kolbenpumpe handelt.

8. Steuergerät (20) für ein Bremssystem (1) eines Fahrzeugs (100), wobei das Bremssystem (1) eine elektrisch betätigbare Druckbereitstellungseinrichtung (3.1, 3.2) und eine Mehrzahl von mit der Druckbereitstellungseinrichtung (3.1, 3.2) verbundenen Radbremsen (2.11, 2.12, 2.21, 2.22) aufweist, die jeweils einem Rad (2.1, 2.2, 2.3, 2.4) des Fahrzeugs (100) zugeordnet sind, wobei das Steuergerät (20) dazu ausgebildet ist:
• Eine Bremsanforderung festzustellen,
• Eine Fahrzeuggeschwindigkeit zu bestimmen,
• Zu prüfen, ob die Fahrzeuggeschwindigkeit unterhalb eines festgelegten Grenzwerts liegt,
• Wenn die Fahrzeuggeschwindigkeit unterhalb des Grenzwerts liegt, eine Teilmenge der Radbremsen (2.11, 2.12, 2.21, 2.22) auszuwählen und
• Das Bremssystem (1) so anzusteuern, dass ausschließlich die Teilmenge der Radbremsen (2.11, 2.12, 2.21, 2.22) mittels der Druckbereitstellungseinrichtung (3.1, 3.2) mit Druck beaufschlagt werden, wobei der Druck in Abhängigkeit der ausgewählten Teilmenge der Radbremsen (2.11, 2.12, 2.21, 2.22) festgelegt wird.

9. Steuergerät (20) nach Anspruch 8, **dadurch gekennzeichnet, dass** das Bremssystem (1) eine Ventileinrichtung aufweist, die zwischen den Radbremsen (2.11, 2.12, 2.21, 2.22) und der Druckbereitstellungseinrichtung (3.1, 3.2) angeordnete Einlassventile (8.10, 8.11, 8.20, 8.21) aufweist, durch die die Radbremsen (2.11, 2.12, 2.21, 2.22) von der Druckbereitstellungseinrichtung (3.1, 3.2) getrennt werden können, wobei das Steuergerät (20) dazu ausgebildet ist, die Ventileinrichtung zur Beaufschlagung der Teilmenge der Radbremsen (2.11, 2.12, 2.21, 2.22) mit einem Druck so anzusteuern, dass die Einlassventile (8.10, 8.11, 8.20, 8.21) der in der Teilmenge enthaltenen Radbremsen (2.11, 2.12, 2.21, 2.22) geöffnet und die Einlassventile (8.10, 8.11, 8.20, 8.21) der nicht in der Teilmenge enthaltenen Radbremsen (2.11, 2.12, 2.21, 2.22) geschlossen werden.

## Claims

1. A method for avoiding jerking moments during deceleration of a vehicle (100) by means of a brake system (1), the brake system (1) having at least one electrically operable pressure-providing device (3.1, 3.2), a plurality of hydraulic wheel brakes (2.11, 2.12, 2.21, 2.22), which are connected to the pressure-providing device (3.1, 3.2) and respectively assigned to a wheel (2.1, 2.2, 2.3, 2.4) of the vehicle (100), and a valve device, the valve device being designed to apply a pressure provided by the pressure-providing device (3.1, 3.2) to a selectable subset of the wheel brakes (2.11, 2.12, 2.21, 2.22) , the method comprising the following steps:
• establishing a braking requirement,
• determining a vehicle speed,
• checking whether the vehicle speed lies below a defined limit value,
• if the vehicle speed lies below the limit value, selecting a subset of the wheel brakes (2.11, 2.12, 2.21, 2.22) and
• applying a pressure by the pressure-providing device (3.1, 3.2) exclusively to the subset of the wheel brakes (2.11, 2.12, 2.21, 2.22), the pressure being fixed according to the selected subset of the wheel brakes (2.11, 2.12, 2.21, 2.22).

2. The method as claimed in claim 1, **characterized in that** the braking requirement is a braking requirement specified by an automatic driving function, in particular an automatic parking aid.

3. The method as claimed in one of the preceding claims, **characterized in that** the method also comprises establishing a driving operating mode, the limit value of the vehicle speed being fixed by the driving operating mode that is established.

4. The method as claimed in one of the preceding claims, **characterized in that** the method comprises the determination of a direction of movement (110, 112, 114, 116) of the vehicle (100), the subset of the wheel brakes (2.11, 2.12, 2.21, 2.22) being selected according to the direction of movement (110, 112, 114, 116) determined.

5. The method as claimed in one of the preceding claims, **characterized in that** the valve device has inlet valves (8.10, 8.11, 8.20, 8.21) which are arranged between the wheel brakes (2.11, 2.12, 2.21, 2.22) and the pressure-providing device (3.1, 3.2) and by which the wheel brakes (2.11, 2.12, 2.21, 2.22) can be disconnected from the pressure-providing device (3.1, 3.2).

6. The method as claimed in claim 5, **characterized in that**, for applying a pressure to the subset of the wheel brakes (2.11, 2.12, 2.21, 2.22) by the pressure-providing device (3.1, 3.2), the inlet valves (8.10, 8.11, 8.20, 8.21) of the wheel brakes (2.11, 2.12, 2.21, 2.22) that are not included in the subset are closed and the inlet valves (8.10, 8.11, 8.20, 8.21) of the wheel brakes (2.11, 2.12, 2.21, 2.22) that are included in the subset are opened and the pressure-providing device (3.1, 3.2) is activated for building up the pressure.

7. The method as claimed in one of the preceding claims, **characterized in that** the pressure-providing device (3.1, 3.2) is a dual-circuit piston pump.

8. A control unit (20) for a brake system (1) of a vehicle (100), the brake system (1) having an electrically operable pressure-providing device (3.1, 3.2) and a plurality of wheel brakes (2.11, 2.12, 2.21, 2.22), which are connected to the pressure-providing device (3.1, 3.2) and respectively assigned to a wheel (2.1, 2.2, 2.3, 2.4) of the vehicle (100) the control unit (20) being designed:
• to establish a braking requirement,
• to determine a vehicle speed,
• to check whether the vehicle speed lies below a defined limit value,
• if the vehicle speed lies below the limit value, to select a subset of the wheel brakes (2.11, 2.12, 2.21, 2.22) and
• to activate the brake system (1) in such a way that a pressure is applied by the pressure-providing device (3.1, 3.2) exclusively to the subset of the wheel brakes (2.11, 2.12, 2.21, 2.22), the pressure being fixed according to the selected subset of the wheel brakes (2.11, 2.12, 2.21, 2.22).

9. The control unit (20) as claimed in claim 8, **characterized in that** the brake system (1) has a valve device, which has inlet valves (8.10, 8.11, 8.20, 8.21) which are arranged between the wheel brakes (2.11, 2.12, 2.21, 2.22) and the pressure-providing device (3.1, 3.2) and by which the wheel brakes (2.11, 2.12, 2.21, 2.22) can be disconnected from the pressure-providing device (3.1, 3.2), the control unit (20) being designed to activate the valve device for applying a pressure to the subset of the wheel brakes (2.11, 2.12, 2.21, 2.22) in such a way that the inlet valves (8.10, 8.11, 8.20, 8.21) of the wheel brakes (2.11, 2.12, 2.21, 2.22) included in the subset are opened and the inlet valves (8.10, 8.11, 8.20, 8.21) of the wheel brakes (2.11, 2.12, 2.21, 2.22) not included in the subset are closed.

## Revendications

1. Procédé pour éviter des moments de secousses lors d'une décélération d'un véhicule (100) au moyen d'un système de freinage (1), le système de freinage (1) présentant au moins un dispositif de fourniture de pression (3.1, 3.2) actionnable électriquement, une pluralité de freins de roue hydrauliques (2.11, 2.12, 2.21, 2.22) reliés au dispositif de fourniture de pression (3.1, 3.2), qui sont chacun affectés à une roue (2.1, 2.2, 2.3, 2.4) du véhicule (100), et un dispositif de soupape, le dispositif de soupape étant configuré pour charger un sous-ensemble sélectionnable des freins de roue (2.11, 2.12, 2.21, 2.22) avec une pression fournie par le dispositif de fourniture de pression (3.1, 3.2), le procédé présentant les étapes suivantes :
- la détection d'une demande de freinage,
- la détermination d'une vitesse du véhicule,
- la vérification de si la vitesse du véhicule est inférieure à une valeur limite définie,
- si la vitesse du véhicule est inférieure à la valeur limite, la sélection du sous-ensemble des freins de roue (2.11, 2.12, 2.21, 2.22) et
- le chargement d'exclusivement le sous-ensemble des freins de roue (2.11, 2.12, 2.21, 2.22) avec une pression par le dispositif de fourniture de pression (3.1, 3.2), la pression étant établie en fonction du sous-ensemble sélectionné des freins de roue (2.11, 2.12, 2.21, 2.22).

2. Procédé selon la revendication 1, **caractérisé en ce que** la demande de freinage consiste en une demande de freinage prédéfinie par une fonction de conduite automatique, notamment une fonction de stationnement automatique.

3. Procédé selon l'une quelconque des revendications précédentes, **caractérisé en ce que** le procédé comprend en outre la détection d'un mode de conduite, la valeur limite de la vitesse du véhicule étant établie par le mode de conduite détecté.

4. Procédé selon l'une quelconque des revendications précédentes, **caractérisé en ce que** le procédé comprend la détermination d'une direction de déplacement (110, 112, 114, 116) du véhicule (100), le sous-ensemble des freins de roue (2.11, 2.12, 2.21, 2.22) étant sélectionné en fonction de la direction de déplacement déterminée (110, 112, 114, 116).

5. Procédé selon l'une quelconque des revendications précédentes, **caractérisé en ce que** le dispositif de soupape comprend des soupapes d'admission (8.10, 8.11, 8.20, 8.21) agencées entre les freins de roue (2.11, 2.12, 2.21, 2.22) et le dispositif de fourniture de pression (3.1, 3.2), par lesquelles les freins de roue (2.11, 2.12, 2.21, 2.22) peuvent être séparés du dispositif de fourniture de pression (3.1, 3.2).

6. Procédé selon la revendication 5, **caractérisé en ce que**, pour charger le sous-ensemble des freins de roue (2.11, 2.12, 2.21, 2.22) avec une pression par le dispositif de fourniture de pression (3.1, 3.2), les soupapes d'admission (8.10, 8.11, 8.20, 8.21) des freins de roue (2.11, 2.12, 2.21, 2.22) non inclus dans le sous-ensemble sont fermées et les soupapes d'admission (8.10, 8.11, 8.20, 8.21) des freins de roue (2.11, 2.12, 2.21, 2.22) inclus dans le sous-ensemble sont ouvertes et le dispositif de fourniture de pression (3.1, 3.2) est commandé pour mettre en place la pression.

7. Procédé selon l'une quelconque des revendications précédentes, **caractérisé en ce que** le dispositif de fourniture de pression (3.1, 3.2) consiste en une pompe à piston à deux circuits.

8. Appareil de commande (20) pour un système de freinage (1) d'un véhicule (100), le système de freinage (1) comprenant un dispositif de fourniture de pression (3.1, 3.2) actionnable électriquement et une pluralité de freins de roue (2.11, 2.12, 2.21, 2.22) reliés au dispositif de fourniture de pression (3.1, 3.2), qui sont chacun affectés à une roue (2.1, 2.2, 2.3, 2.4) du véhicule (100), l'appareil de commande (20) étant configuré pour :
- détecter une demande de freinage,
- déterminer une vitesse du véhicule,
- vérifier si la vitesse du véhicule est inférieure à une valeur limite établie,
- si la vitesse du véhicule est inférieure à la valeur limite, sélectionner un sous-ensemble des freins de roue (2.11, 2.12, 2.21, 2.22) et
- commander le système de freinage (1) de telle sorte qu'exclusivement le sous-ensemble des freins de roue (2.11, 2.12, 2.21, 2.22) est chargé en pression au moyen du dispositif de fourniture de pression (3.1, 3.2), la pression étant établie en fonction du sous-ensemble sélectionné des freins de roue (2.11, 2.12, 2.21, 2.22).

9. Appareil de commande (20) selon la revendication 8, **caractérisé en ce que** le système de freinage (1) comprend un dispositif de soupape qui comprend des soupapes d'admission (8.10, 8.11, 8.20, 8.21) agencées entre les freins de roue (2.11, 2.12, 2.21, 2. 22) et le dispositif de fourniture de pression (3.1, 3.2), par lesquelles les freins de roue (2.11, 2.12, 2.21, 2.22) peuvent être séparés du dispositif de fourniture de pression (3.1, 3.2), l'appareil de commande (20) étant configuré pour commander le dispositif de soupape pour charger le sous-ensemble des freins de roues (2.11, 2.12, 2.21, 2.22) avec une pression de telle sorte que les soupapes d'admission (8.10, 8.11, 8.20, 8.21) des freins de roue (2.11, 2.12, 2.21, 2.22) inclus dans le sous-ensemble sont ouvertes et les soupapes d'admission (8.10, 8.11, 8.20, 8.21) des freins de roue (2.11, 2.12, 2.21, 2.22) non inclus dans le sous-ensemble sont fermées.
